# FASCICULE DE BREVET EUROPEEN

(11) **EP 2 136 618 B1**
(45) Date de publication et mention de la délivrance du brevet: **06.07.2011**
(21) Numéro de dépôt: 07731307.0
(22) Date de dépôt: 17.04.2007
(51) Int. Cl.: A01K 45/00

(54) **DISPOSITIF DE CONVOYAGE D'ANIMAUX VIVANTS ET SYSTEME DE SEXAGE AUTOMATIQUE DE POUSSINS COMPRENANT UN TEL DISPOSITIF**
VORRICHTUNG ZUM BEFÖRDERN VON LEBENDEN TIEREN UND SOLCH EINE VORRICHTUNG UMFASSENDES AUTOMATISCHES KÜKENGESCHLECHTSBESTIMMUNGSSYSTEM
DEVICE FOR CONVEYING LIVE ANIMALS AND AUTOMATIC CHICK SEXING SYSTEM COMPRISING SUCH A DEVICE

(43) Date de publication de la demande: 30.12.2009
(73) Titulaire: Egg-Chick Automated Technologies, 35740 Pace (FR)
(72) Inventeur: NADREAU, Michael, F-29400 Landivisiau (FR); YVIN, Jean-Claude, F-29250 Plougoulm (FR); LE MOINE, Patrick, F-29600 Morlaix (FR)
(74) Mandataire: Hays, Bertrand
(86) Numéro de dépôt international: PCT/FR2007/000642
(87) Numéro de publication internationale: WO 2008/125741

(56) Documents cités:
- EP-A- 1 092 347
- US-A- 5 626 101
- US-B1- 6 512 839

## Description

La présente invention concerne un dispositif de convoyage d'animaux vivants, notamment de poussins, et un système de sexage automatique de poussins comprenant un tel dispositif de convoyage.

Il est connu, notamment par le document brevet EP 1 092 347 un procédé de sexage automatique de poussins, dans lequel la détermination du sexe des poussins est basée sur un examen des cartilages des plumes aux extrémités supérieures des ailes. Dans une première étape de ce procédé, le poussin est convoyé de sorte qu'il perd son équilibre et qu'il écarte automatiquement ses ailes par reflexe. Les ailes écartées sont prises en photo, et les photos sont ensuite analysées pour en déduire le sexe des poussins, les poussins étant ensuite triés suivant leur sexe. Ce document brevet propose plusieurs dispositifs de convoyage permettant d'obtenir cette perte d'équilibre des poussins. Dans l'un des modes de réalisation proposés, les poussins sont initialement placés au centre d'un carrousel, ils glissent dans des canaux du carrousel et tombent dans des entonnoirs qui reposent sur les godets d'un convoyeur à godets. Les pieds de chaque poussin reposent sur le fond du godet, le godet est descendu vers le bas par rapport à l'entonnoir de sorte que le poussin perd son équilibre et retombe les ailes écartées dans le godet, ses ailes restant écartées sur un rebord supérieur horizontal du godet. Lorsque le godet descend, le poussin se retrouve uniquement en appui par ses ailes contre l'entonnoir et doit plier davantage ses ailes vers le haut pour retomber dans le godet, ce qui peut provoquer certains traumatismes au niveau des ailes. En outre le poussin peut rester bloqué dans l'entonnoir, ses ailes en appui contre la paroi inclinée de l'entonnoir.

Il est également proposé dans ce document brevet des dispositifs de convoyage, de type à bande sans fin, dans lesquels les poussins sont disposés les uns à la suite des autres, l'écartement automatique des ailes étant obtenu par vibration, oscillation ou décharge électrique. Toutefois, ces dispositifs ne permettent pas de garantir un pas d'écartement précis entre les poussins, nécessaire pour la prise des photos.

Le but de la présente invention est de proposer un nouveau dispositif de convoyage palliant les inconvénients précités.

A cet effet, la présente invention a pour objet un dispositif de convoyage d'animaux vivants suivant la revendication 1, comprenant notamment dans le cas de poussins une section de convoyage de poussins dans laquelle lesdits poussins sont positionnés dans des godets avec leurs ailes écartées, caractérisé en ce qu'il comporte un premier convoyeur sans fin à godets comportant des godets de pré-positionnement aptes à recevoir et transporter individuellement un animal vivant entre des moyens de renvoi amont et des moyens de renvoi aval, depuis une zone de chargement amont jusqu'à une zone de transfert aval, et un second convoyeur sans fin à godets, comportant des godets de triage aptes à recevoir et transporter individuellement un animal vivant entre des moyens de renvoi amont et des moyens de renvoi aval, ledit premier convoyeur et ledit second convoyeur étant disposés de sorte que chaque animal vivant pré-positionné dans un godet de pré-positionnement tombe dudit godet de pré-positionnement dans un godet de triage disposé en dessous dudit godet de pré-positionnement.

Selon l'invention, le dispositif de convoyage permet de faire chuter chaque animal vivant depuis un godet de pré-positionnement du premier convoyeur dans un godet de triage du second convoyeur.

Selon une particularité, les godets de pré-positionnement du brin inférieur du premier convoyeur sont aptes à recevoir par le haut les animaux vivants, ledit premier convoyeur comprenant des moyens de maintien permettant de maintenir les animaux vivants dans lesdits godets depuis une zone de chargement jusqu'à une zone de transfert au niveau de laquelle les animaux vivants chutent par le fond ouvert des godets dans les godets de triage du brin supérieur du deuxième convoyeur, les moyens de renvoi amont du second convoyeur étant disposés en dessous des moyens de renvoi aval du premier convoyeur, le second convoyeur étant par exemple disposé dans le prolongement du premier convoyeur.

Selon un mode de réalisation, lesdits moyens de maintien comprennent une bande sans fin montée entre des moyens de renvoi amont et des moyens de renvoi aval et dont le brin supérieur est disposé en dessous du brin inférieur, parallèlement à ce dernier, en vis-à-vis des extrémités inférieures ouvertes des godets de triage dudit brin inférieur et avance sensiblement en synchronisme avec ledit brin inférieur, de sorte que les animaux vivant présents dans lesdits godets de triage viennent en appui par leur pied sur ledit brin supérieur de la bande sans fin, les animaux vivant chutant des godets de pré-positionnement lorsque ces derniers dépassent les moyens de renvoi aval de la bande sans fin.

Selon un mode de réalisation, les godets de pré-positionnement sont formés de tubes creux montés sur des platines rectangulaires disposées parallèlement entre elles les unes à la suite des autres et assemblées par leur extrémités latérales entre deux chaînes sans fin parallèles synchronisées.

Avantageusement, le pas d'écartement entre deux godets de triage successifs est supérieur au pas d'écartement entre deux godets de pré-positionnement successifs, la vitesse d'avancement du convoyeur de triage étant supérieure à celle du convoyeur de pré-positionnement.

Avantageusement, le premier convoyeur comprend des rangées transversales successives d'au moins deux godets de pré-positionnement, le convoyeur de triage comprenant des rangées transversales successives d'au moins deux godets de triage.

Le dispositif de convoyage peut comprendre en outre un système de chargement apte à amener les animaux vivants les uns à la suite des autres au niveau des godets de pré-positionnement, en particulier au niveau de chaque ligne de godets de pré-positionnement.

La présente invention a également pour objet un système de sexage automatique de poussins suivant la revendication 8, caractérisé en ce qu'il comprend un dispositif de convoyage tel que défini précédemment, chaque godet de triage comprenant un rebord, de préférence incliné, sur lequel sont destinées à reposer les ailes écartées des poussins tombant des godets de pré-positionnement, et des moyens d'acquisition d'image aptes à obtenir une photo d'au moins une des ailes de chaque poussin présent dans un godet de triage pour en déterminer le sexe.

Avantageusement, ledit rebord des godets de triage se prolonge par le haut par une paroi inclinée de guidage. Selon un mode de réalisation, chaque godet de triage est équipé d'une trappe munie de moyens d'ouverture/ fermeture, ledit convoyeur de triage étant équipé de moyens d'actionnement desdits moyens d'ouverture/fermeture pour l'éjection par le bas du poussin vers différents moyens de récupération, par exemple de type convoyeur à bande sans fin, en fonction du résultat du traitement des images. Le système de sexage peut en outre comprendre des systèmes de soufflerie disposés au dessus du brin supérieur du convoyeur de triage, aptes à souffler de l'air en direction de chaque godet de triage lors de l'ouverture de sa trappe.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé. Sur ce dessin :
- les figures 1 et 2 représentent des vues en perspective d'un système de sexage automatique de poussins conforme à l'invention;
- la figure 3 représente une vue de côté du dispositif de sexage automatique des figures 1 et 2 ;
- les figures 4 et 5 représentent respectivement des vues partielles agrandies des figures 1 et 3, illustrant la zone de transfert des poussins du premier convoyeur à godets vers le deuxième convoyeur à godets ;
- les figures 6A et 6B représentent des vues en perspective d'un godet du deuxième convoyeur -à godets, avec sa trappe en position fermée ;
- les figures 7A et 7B représentent des vues de côté du godet illustré aux figures 6A et 6B, avec sa trappe en position ouverte ; et,
- la figure 8 représente une partielle agrandie de la figure 2, illustrant les zones d'éjection des poussins du deuxième convoyeur à godets.

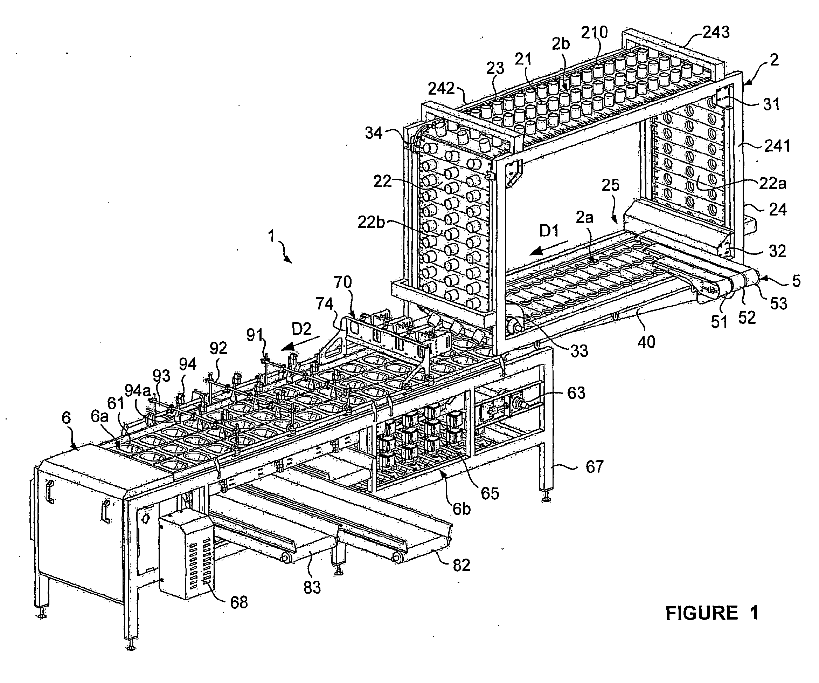

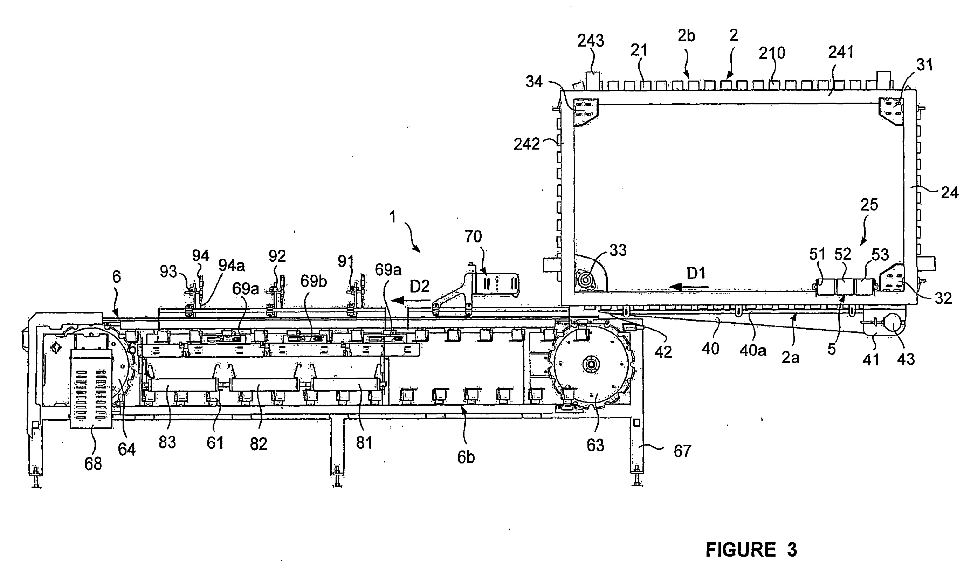

En référence aux figures 1 à 3, le dispositif de sexage automatique comprend un dispositif de convoyage de poussins 1 qui comporte un premier convoyeur sans fin à godets 2, dit de pré-positionnement et un second convoyeur sans fin à godets, dit de triage 6, ces convoyeurs étant conformés et disposés l'un par rapport à l'autre de sorte que des poussins pré-positionnés dans les godets du convoyeur de pré-positionnement tombent dans les godets du convoyeur de triage, les poussins venant se positionner dans les godets de triage avec leurs ailes maintenues écartées.

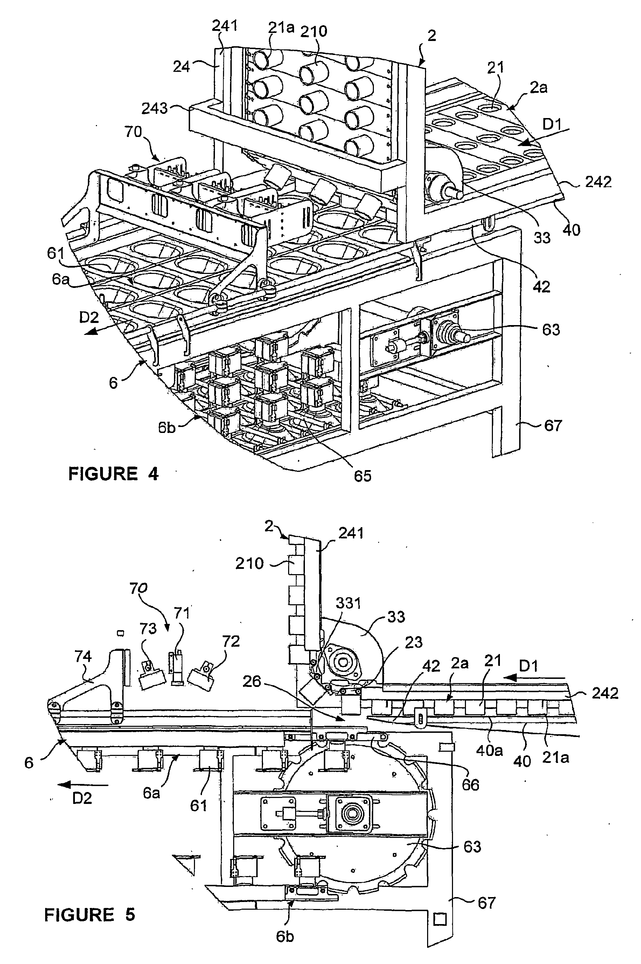

Le convoyeur de pré-positionnement 2 comprend des godets de pré-positionnement 21 montés en boucle les uns à la suite des autres autour de moyens de renvoi amont supérieur et inférieur, respectivement 31 et 32, et des moyens de renvoi aval inférieur et supérieur, respectivement 33 et 34. Le transport des poussins est réalisé dans les godets 21 du brin inférieur 2a du convoyeur défini entre les moyens de renvoi inférieur amont et aval 32, 33, entre une zone amont de chargement 25 et une zone aval de transfert 26 définie ci-après. Un ou plusieurs godets, chacun formé d'un tube creux de section circulaire 210, est monté sur une platine rectangulaire 22. Les platines sont assemblées parallèlement les unes aux autres par leurs extrémités aux maillons de deux chaînes sans fin parallèles 23 qui engrènent sur des paires de roues dentées 331 (figure 5), chaque paire constituant un moyen de renvoi défini précédemment. Les roues de chaque paire sont solidaires d'un axe 332 monté mobile en rotation sur un châssis support 24. Le châssis support comprend deux cadres rectangulaires latéraux 241, 242 reliés parallèlement entre eux par des traverses 243. Les axes des paires de roues amont supérieures sont montés entre les cadres, aux quatre coins de ces derniers. Le châssis support repose sur le sol par des pieds (non représentés), de sorte que le brin inférieur 2a soit disposé sensiblement à l'horizontal. L'écartement entre les moyens de renvoi supérieurs 31, 34 et les moyens de renvoi inférieurs 32, 33 est déterminé pour obtenir un espace entre le brin supérieur 2b et le brin inférieur 2a suffisamment important pour permettre le chargement et le transport des poussins dans les godets de pré-positionnement du brin inférieur, ainsi que l'éventuelle intervention d'un opérateur, dans des conditions ergonomiques, pour placer des poussins dans lesdits godets.

L'avancement du brin inférieur du convoyeur de pré-positionnement dans la direction d'avancement illustrée par la flèche référencée D1, est assuré au moyen d'au moins un moteur apte à entraîner en rotation l'axe des roues formant les moyens de renvoi amont inférieur et/ou aval inférieur.

Dans l'exemple illustré sur les figures, chaque platine 22 porte trois godets 21 disposés côte à côte, transversalement à la direction d'avancement D1, le convoyeur de pré-positionnement comprenant ainsi trois lignes parallèles de godets. Les tubes 210 formant les godets sont assemblés perpendiculairement aux platines dans des ouvertures traversantes de ces dernières, de sorte que l'extrémité supérieure ouverte des tubes affleure sensiblement la face intérieure 22b des platines. Les tubes sont en saillie vers l'extérieur, leur extrémité extérieure ouverte 21a à distance de la face extérieure 22a des platines.

Le convoyeur de pré-positionnement est équipé d'une bande sans fin 40 disposée en dessous dudit convoyeur pour permettre de maintenir les poussins dans les godets du brin inférieur 2a. Comme mieux visible sur la figure 5, le brin supérieur 40a de la bande sans fin est disposé parallèlement au brin inférieur 2a, en vis-à-vis des extrémités extérieure 21a des godets, appelées également extrémités inférieures. La bande sans fin est montée entre un rouleau de renvoi en amont 41, disposé sensiblement au niveau du moyen de renvoi amont inférieur 32, et un sabre de renvoi 42. Le rouleau de renvoi amont est entraîné en rotation par un moteur 43, de sorte que le brin supérieur 40a de la bande sans fin avance sensiblement en isovitesse avec le brin inférieur, dans la direction d'avancement D1. L'extrémité du sabre de renvoi aval est disposée en amont du moyen de renvoi aval inférieur 33 du convoyeur de pré-positionnement, de sorte que le brin inférieur 2a du premier convoyeur comprend au moins une rangée de trois godets d'une même platine qui ne soit pas disposée en vis-à-vis du brin supérieur 40a de la bande sans fin. Chaque platine défile sensiblement horizontalement au-delà de l'extrémité du sabre de renvoi 42 avant de venir s'enrouler sur les moyens de renvoi aval inférieur. Lorsqu'un godet de pré-positionnement arrive au niveau de la zone de transfert 26 définie au-delà du sabre de renvoi, le poussin contenu dans ledit godet de pré-positionnement tombe vers le bas par gravité.

Le convoyeur de pré-positionnement est en outre équipé d'un système de chargement 5 comprenant trois convoyeurs de chargement de type à bande sans fin 51, 52 53 pour permettre le chargement de poussins dans les godets de chaque ligne. Les convoyeurs de chargement, représentés schématiquement sur les figures, sont disposés perpendiculairement au convoyeur de pré-positionnement, et parallèlement les uns aux autres, et sont destinés à recevoir sur leur brin supérieur les poussins les uns à la suite des autres. Les roues de renvoi aval des convoyeurs de chargement sont disposées au dessus du brin inférieur 2a, au niveau de la zone de chargement 25, et sont décalées transversalement par rapport à la direction d'avancement D1, de sorte qu'une extrémité aval de convoyeur de chargement soit disposée à l'aplomb de chaque ligne de godets. Les convoyeurs de chargement sont équipés de rives latérales de guidage (non représentées) pour maintenir les poussins sur leur brin supérieur.

Le convoyeur de triage 6 est disposé dans le prolongement du convoyeur de pré-positionnement et comprend des rangées successives de trois godets de triage 61 montées en boucle autour d'un moyen de renvoi amont 63 et un moyen de renvoi aval 64. En référence aux figures 4 et 5, le brin supérieur 6a est disposé sensiblement horizontalement en dessous du brin inférieur 2a du convoyeur de pré-positionnement, de sorte qu'une rangée de godets de triage 61 soit disposée sensiblement en vis-à-vis d'une rangée de godets de pré-positionnement 21 se déplaçant au-delà de l'extrémité du sabre de renvoi 42.

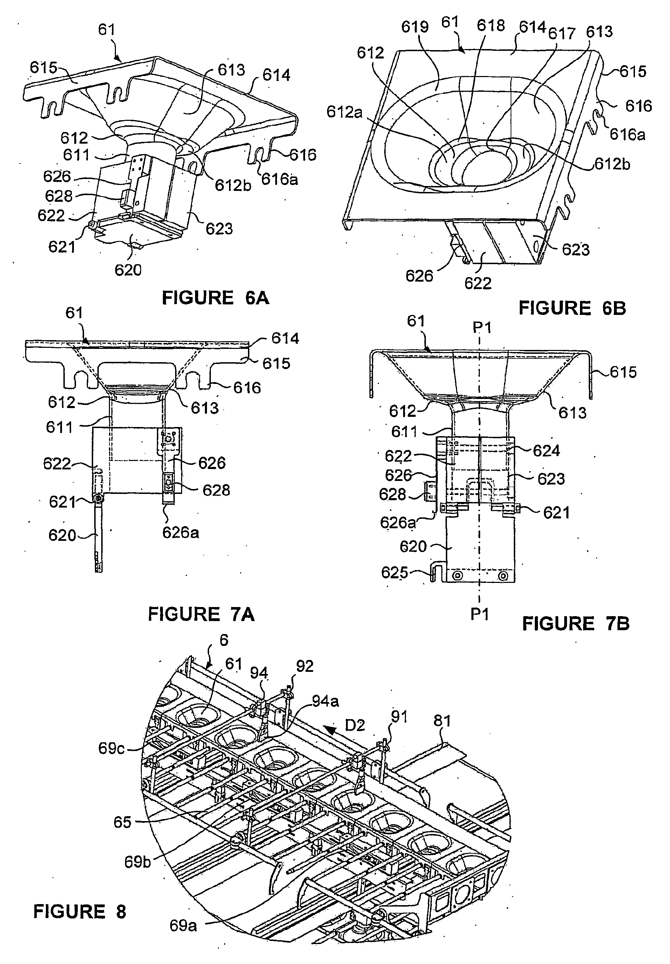

Suivant les figures 6A-B et 7A-B, chaque godet de triage 61 est formé d'un réceptacle en forme d'entonnoir comprenant une partie inférieure tubulaire 611 se prolongeant par le haut par une partie intermédiaire 612 de section transversale sensiblement ovale, définissant deux rebords intermédiaires 612a, 612b légèrement inclinés, diamétralement opposés, de part et d'autre du plan de symétrie P1 (Figure 7B), et une partie supérieure 613 de section sensiblement ovale définissant une paroi inclinée de guidage pour guider les poussins vers la partie inférieure tubulaire. Cette partie supérieure présente un bord supérieur horizontal rectangulaire 614 comprenant deux rebords opposés 615 de part et d'autre du plan P1, s'étendant perpendiculairement vers le bas, chaque rebord étant muni de deux pattes d'assemblage 616 avec encoche 616a. Les différentes parties 611-613 du réceptacle, et le bord supérieur horizontal 614, sont reliés entre eux par des zones de jonction coudées 617-619 (Figure 6B). Le réceptacle ne comprend ainsi aucune arête susceptible de blesser le poussin lorsqu'il tombe dans le réceptacle.

Les godets de triage sont montés sur des tiges transversales parallèles 65 assemblées par leurs extrémités sur les maillons de chaînes sans fin parallèles 66 (figure 5), à déplacement synchrone, les chaînes étant montées en boucle sur des roues crantées de renvoi amont et aval, constituants les moyens de renvoi précités 63, 64. Les paires de roues sont chacune solidaire d'un axe monté mobile en rotation sur un châssis porteur 67, au moins l'une des paires de roues étant entraînée en rotation par un moteur 68, de sorte que le brin supérieur 6a soit entrainé dans la direction d'avancement illustrée par la flèche référencée D2. L'assemblage de chaque godet de triage est réalisé par l'enclenchement de deux tiges adjacentes 65 dans les encoches 616a des pattes d'assemblage, le plan de symétrie P1 des godets disposé parallèlement à la direction d'avancement D2, la dimension la plus large des parties 612 et 613 à section ovale disposée perpendiculairement à la direction d'avancement D2. Une fois assemblés sur les tiges transversales, les godets de triage d'une même rangée et d'une même ligne sont disposés bord à bord.

Chaque godet comprend une trappe 620 formée d'une plaque montée pivotante autour d'un axe 621 qui est assemblé entre deux demi-brides de fixation 622, 623 serrées au moyen de vis 624 sur la partie tubulaire 611. L'axe de pivotement de la trappe est disposé perpendiculairement à la direction d'avancement D2. Une lame élastique 626 s'étendant de bas en haut est fixée par une extrémité sur l'une des faces d'une demi-bride parallèle à la direction d'avancement et présente une extrémité libre inférieure 626a, recourbée vers l'extérieur, apte à venir s'enclencher au repos avec une patte latérale 625 de la trappe pour maintenir cette dernière en position fermée. La lame présente sur sa face extérieure un plot d'actionnement 628 sur lequel une pression pourra être exercée pour désenclencher l'extrémité recourbée 626a de la patte de la trappe et permettre ainsi l'ouverture de la trappe.

Le dispositif de sexage automatique comprend des moyens d'acquisition d'image 70 disposés en aval de la zone de transfert au dessus du brin supérieur 6a du deuxième convoyeur. Ces moyens comprennent une caméra numérique 71 disposée au dessus de chaque ligne de godets de triage. Les trois caméras numériques sont montées sur une rampe support 74 disposée transversalement au-dessus du convoyeur de triage au niveau de sa partie aval, et fixée au châssis 67. Chaque caméra est apte à prendre une photo des ailes de chaque poussin disposé dans les godets successifs d'une ligne. Des sources lumineuses sont montées sur la rampe pour éclairer les ailes des poussins au moment de la prise des photos. Deux sources lumineuses 72, 73 sont par exemple disposées de part et d'autre de la caméra, l'une 72 en amont, l'autre 73 en aval de la caméra. Avantageusement, les sources lumineuses sont de type LED bleue, afin d'accentuer la différence entre le cartilage par rapport au duvet. Ces caméras sont reliées à une unité de contrôle (non représentée) qui traite les images prises par les caméras pour déterminer le sexe des poussins.

Le pas d'écartement entre deux godets de triage successifs d'une même ligne est suffisant pour permettre les prises de photo. Ce pas d'écartement est supérieur au pas d'écartement de deux godets de pré-positionnement successifs d'une même ligne du convoyeur de pré-positionnement, la vitesse d'avancement du convoyeur de pré-positionnement étant inférieure à celle du convoyeur de triage. Le convoyeur de pré-positionnement peut ainsi fonctionner à une vitesse suffisamment réduite pour permettre à un opérateur de placer manuellement dans les godets les poussins arrivant depuis les convoyeurs de chargement. A titre d'exemple, le pas d'écartement entre les godets de triage est deux fois plus important que celui des godets de pré-positionnement, la vitesse d'avancement du convoyeur de triage étant sensiblement deux fois supérieure à celle du convoyeur de pré-positionnement. Les moteurs du convoyeur de triage et du convoyeur de pré-positionnement sont commandés par l'unité de contrôle. Selon une variante de réalisation, le convoyeur de triage est entraîné par le moteur 68 tel que décrit précédemment, et le convoyeur de pré-positionnement est avantageusement entraîné par le convoyeur de triage via une synchronisation mécanique, telle qu'une chaîne de transmission ou une courroie crantée reliant par exemple les axes des moyens de renvoi amont 63 et des moyens de renvoi aval inférieur 33.Suivant la figure 8, le dispositif de sexage comprend en outre des moyens d'actionnement 69, reliés à l'unité de contrôle, et disposés en aval des caméras, en dessous du brin supérieur 6a du convoyeur de pré-positionnement pour actionner les trappes des godets afin d'évacuer les poussins vers le bas. Chaque moyen d'actionnement comprend un piston de commande apte à déplacer une came entre une position de repos dans laquelle la came est écartée des plots 628 des lames des godets d'une ligne, et une position active dans laquelle le plot d'un godet vient en appui contre ladite came de manière à déplacer la lame 626 et ainsi libérer l'extrémité recourbée 626a de la patte 625 de la trappe pour permettre l'ouverture de cette dernière. Le dispositif comprend trois ensembles de trois moyens d'actionnement. Les trois moyens d'actionnement de chaque ensemble sont disposés transversalement côte à côte pour actionner chacun les trappes des godets de triage d'une même ligne, les trois ensembles étant décalés le long du chemin de transport du convoyeur de triage. Un moyen d'actionnement de chaque ensemble est représenté sous les références 69a, 69b et 69c sur la figure 8.

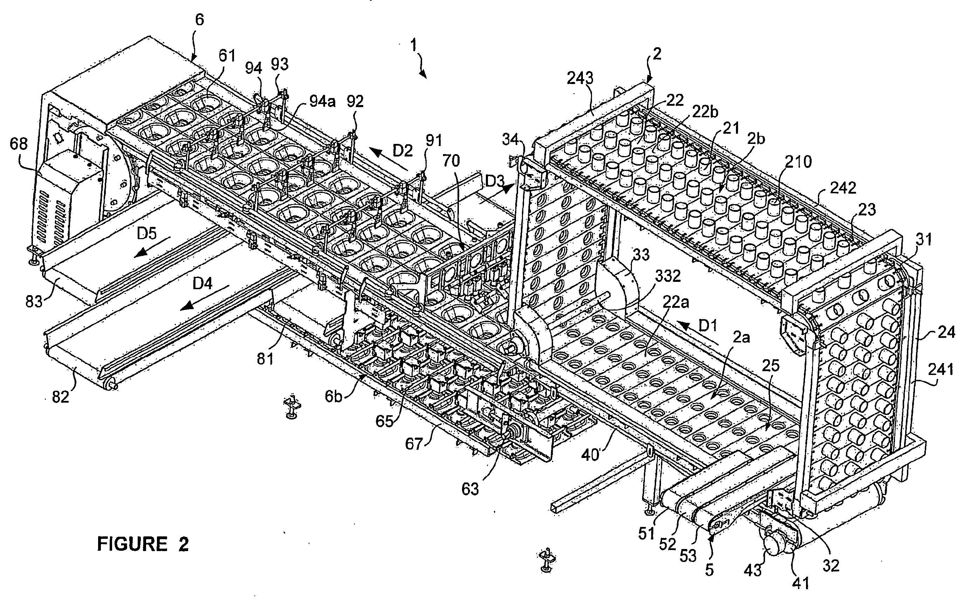

Le dispositif de sexage comprend d'amont en aval un premier, un deuxième et un troisième convoyeurs de récupération à bande sans fin, respectivement 81, 82 et 83, disposés sensiblement transversalement au convoyeur de pré-positionnement, entre son brin supérieur 6a et son brin inférieur 6b. Chaque convoyeur de récupération est associé à un ensemble de moyen d'actionnement pour récupérer sur son brin supérieur les poussins tombant des godets de triage. A titre d'exemple, les poussins dont le sexe n'a pu être déterminé suite au traitement des images par l'unité de contrôle seront transférés sur le premier convoyeur de récupération 81, pour être réorientés par la suite vers le convoyeur de pré-positionnement pour un nouveau traitement. Les poussins identifiés comme étant des mâles et ceux identifiés comme étant des femelles seront transférés respectivement sur le deuxième convoyeur de récupération 82 et le troisième convoyeur de récupération 83. Les convoyeurs de récupération fonctionneront de manière continue ou discontinue, sous contrôle de l'unité de contrôle, le premier convoyeur de récupération 81 évacuant les poussins vers la droite du convoyeur de pré-positionnement par rapport à la direction d'avancement, tandis que le deuxième et le troisième convoyeur de récupération 82, 83 évacuent les poussins vers la gauche. Les flèches référencées D3, D4 et D5 sur la figure 2 représentent respectivement les directions d'avancement des brins supérieurs du premier, du deuxième et du troisième convoyeurs de récupération.

Afin d'assurer l'évacuation des poussins hors des godets lors de l'ouverture des trappes, le dispositif de sexage comprend trois rampes 91, 92, 93 disposées transversalement au dessus du brin supérieur 6a du convoyeur de triage, portant chacune trois systèmes de soufflerie 94, chaque système de soufflerie étant apte à souffler de l'air vers le bas via une buse 94a en direction des godets de triage d'une ligne. Une rampe est disposée au niveau de chaque convoyeur de récupération.

Une description du fonctionnement va à présent être effectuée. Les poussins sont amenés les uns derrière les autres sur le brin inférieur 2a du convoyeur de pré-positionnement, au niveau de la zone de chargement 25, les poussins tombent dans les godets des trois lignes défilant dans la direction d'avancement D1. Les éventuels poussins tombant sur les platines sont positionnés manuellement par un ou plusieurs opérateurs dans des godets de pré-positionnement vides. Chaque poussin placé dans un godet a ses pattes en appui sur le brin supérieur 40a de la bande sans fin défilant sensiblement à la même vitesse que le convoyeur de pré-positionnement. L'écartement entre l'extrémité inférieure ouverte 21a des godets de pré-positionnement et le brin supérieur 40a de la bande sans fin permet d'éviter un blocage des pattes en cas d'éventuel écart entre la vitesse linéaire du brin inférieur 2a du convoyeur de pré-positionnement et la vitesse linéaire du brin supérieur de la bande sans fin. La profondeur des godets de pré-positionnement est déterminée de sorte que le poussin ne puisse pas en sortir.

Lorsqu'une rangée de godets de pré-positionnement arrive au-delà de l'extrémité du sabre de renvoi aval 42, au niveau de la zone de transfert 26, les poussins tombent par l'extrémité inférieure ouverte des godets de pré-positionnement dans la rangée de godets de triage vides disposée en vis-à-vis. Dès que les poussins perdent contact avec la bande sans fin, ils écartent instinctivement leurs ailes. Lorsqu'un poussin tombe dans un godet de triage, la paroi inclinée de guidage de la partie supérieure 613 guide le poussin avec ses ailes écartées vers le fond du godet dans la partie inférieure tubulaire 611. Le poussin est en appui par les extrémités de ses pieds sur la plaque formant trappe, et ses ailes écartées reposent sur les rebords intermédiaires 612a, 612b. La paroi inclinée de la partie supérieure présente un angle d'inclinaison compris entre 60 et 30° par rapport à l'horizontal, par exemple de l'ordre de 45°. L'inclinaison légère des rebords permet d'éviter que le poussin prenne appui contre ces dernières par ses ailes pour sortir du réceptacle. L'angle d'inclinaison de ces rebords est compris entre 5 et 10° par rapport à l'horizontal, par exemple de l'ordre de 10°.

Les rangées de godets défilent successivement sous les caméras 71. Les trois caméras prennent simultanément une photo des ailes des poussins disposés dans les trois godets de chaque rangée. Les photos sont récupérées et traitées par l'unité de contrôle pour déterminer le sexe des poussins contenus dans les godets. Pour chaque godet d'une ligne, l'unité de contrôle commande le déplacement de l'un des trois pistons des moyens d'actionnement 69 correspondant à ladite ligne, pour évacuer le poussin soit sur le premier convoyeur de récupération 81 lorsque le traitement de la photo n'a pas pu permettre de déterminer le sexe du poussin, soit sur le deuxième convoyeur de récupération 82 lorsque le poussin a été identifié comme étant un mâle, soit sur le troisième convoyeur de récupération 83 lorsque ledit poussin a été identifié comme étant une femelle. Lors de l'actionnement d'un des pistons pour ouvrir la trappe d'un godet, l'unité de contrôle commande la buse 94a du système de soufflerie 94 disposé au dessus dudit godet pour souffler de l'air en direction du fond du godet. Les godets défilant au-delà du troisième ensemble de moyen d'actionnement ont leur trappe en position ouverte, les trappes se refermant automatiquement, éventuellement par simple gravité, lors de l'enroulement des godets autour des moyens de renvoi aval 64.

Dans une variante de réalisation, en remplacement de la bande sans fin 40 permettant le maintien des poussins dans les godets 21 du brin inférieur 2a, le convoyeur de pré-positionnement comprend des godets de pré-positionnement munis de trappes, des moyens d'actionnement alors étant prévus pour permettre l'ouverture simultanée des trappes des trois godets d'une même rangée, lorsque cette dernière est disposée en vis à-vis d'une rangée de godets de triage du deuxième convoyeur de triage.

Bien entendu, le dispositif de convoyage selon l'invention peut être utilisé pour effectuer le triage de différents animaux vivants, en particuliers des volailles, en fonction de leur sexe, ou en fonction d'autre critère tel que leur couleur, taille et/ou poids.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention selon les revendications suivantes.

## Revendications

1. Dispositif de convoyage d'animaux vivants, comprenant notamment dans le cas de poussins une section de convoyage de poussins dans laquelle lesdits poussins sont positionnés dans des godets avec leurs ailes écartées, **caractérisé en ce qu'**il comporte un premier convoyeur sans fin à godets (2) comportant des godets de pré-positionnement (21) aptes à recevoir et transporter individuellement un animal vivant entre des moyens de renvoi amont (32) et des moyens de renvoi aval (33), et un second convoyeur sans fin à godets (6), comportant des godets de triage (61) aptes à recevoir et transporter individuellement un animal vivant entre des moyens de renvoi amont (63) et des moyens de renvoi aval (64), ledit premier convoyeur et ledit second convoyeur étant disposés de sorte que chaque animal vivant pré-positionné dans un godet de pré-positionnement tombe dudit godet de pré-positionnement dans un godet de triage disposé en dessous dudit godet de pré-positionnement.

2. Dispositif de convoyage (1) selon la revendication 1, **caractérisé en ce que** les godets de pré-positionnement (21) du brin inférieur (2a) du premier convoyeur (2) sont aptes à recevoir par le haut les animaux vivants, ledit premier convoyeur comprenant des moyens de maintien (40) permettant de maintenir les animaux vivants dans lesdits godets depuis une zone de chargement (25) jusqu'à une zone de transfert (26) au niveau de laquelle les animaux vivants chutent par le fond ouvert des godets dans les godets de triage (61) du brin supérieur (6a) du deuxième convoyeur.

3. Dispositif de convoyage (1) selon la revendication 2, **caractérisé en ce que** lesdits moyens de maintien comprennent une bande sans fin (40) montée entre des moyens de renvoi amont (41) et des moyens de renvoi aval (42) et dont le brin supérieur (40a) est disposé en dessous du brin inférieur (2a), parallèlement à ce dernier, en vis-à-vis des extrémités inférieures ouvertes (21a) des godets de triage dudit brin inférieur (2a) et avance sensiblement en synchronisme avec ledit brin inférieur.

4. Dispositif de convoyage (1) selon la revendication 3, **caractérisé en ce que** les godets de pré-positionnement sont formés de tubes creux (210) montés sur des platines rectangulaires (22) disposées parallèlement entre elles les unes à la suite des autres et assemblées par leur extrémités latérales entre deux chaînes sans fin parallèles synchronisées.

5. Dispositif de convoyage (1) selon l'une des revendications 1 à 4, **caractérisé en ce que** le pas d'écartement entre deux godets de triage (61) successifs est supérieur au pas d'écartement entre deux godets de pré-positionnement (21) successifs, la vitesse d'avancement du convoyeur de triage (6) étant supérieure à celle du convoyeur de pré-positionnement (2).

6. Dispositif de convoyage (1) selon l'une des revendications 1 à 5, **caractérisé en ce que** le premier convoyeur (2) comprend des rangées transversales successives d'au moins deux godets de pré-positionnement (21), le convoyeur de triage (6) comprenant des rangées transversales successives d'au moins deux godets de triage (61).

7. Dispositif de convoyage (1) selon l'une des revendications 1 à 5, **caractérisé en ce qu'**il comprend en outre un système de chargement (5) apte à amener les animaux vivants les uns à la suite des autres au niveau des godets de pré-positionnement.

8. Système de sexage automatique de poussins, **caractérisé en ce qu'**il comprend un dispositif de convoyage (1) selon l'une des revendications 1 à 7, chaque godet de triage (61) comprenant un rebord (612a, 612b), de préférence incliné, sur lequel sont destinées à reposer les ailes écartées des poussins tombant des godets de pré-positionnement, et des moyens d'acquisition d'image (70) aptes à obtenir une photo d'au moins une des ailes de chaque poussin présent dans un godet de triage pour en déterminer le sexe.

9. Système de sexage automatique de poussins selon la revendication 8, **caractérisé en ce que** ledit rebord (612a, 612b) se prolonge par le haut par une paroi inclinée de guidage (613).

10. Système de sexage automatique de poussins selon la revendication 8 ou 9, **caractérisé en ce que** chaque godet de triage est équipé d'une trappe (620) munie de moyens d'ouverture/ fermeture (625, 626), ledit convoyeur de triage étant équipé de moyens d'actionnement (69) desdits moyens d'ouverture/fermeture pour l'éjection par le bas du poussin vers différents moyens de récupération en fonction du résultat du traitement des images.

## Claims

1. Living animals conveying device, comprising in particular in the case of chicks a section of conveying chicks wherein said chicks are positioned in buckets with their wings spread out, **characterised in that** it comprises a first endless bucket conveyor (2) comprising pre-positioning buckets (21) able to individually receive and transport a living animal between upstream return means (32) and downstream return means (33), and a second endless bucket conveyor (6), comprising sorting buckets (61) able to individually receive and transport a living animal between upstream return means (63) and downstream return means (64), said first conveyor and said second conveyor being arranged in such a way that each living animal pre-positioned in a pre-positioning bucket falls from said pre-positioning bucket into a sorting bucket arranged below said pre-positioning bucket.

2. Conveying device (1) according to claim 1, **characterised in that** the pre-positioning buckets (21) of the lower strand (2a) of the first conveyor (2) are able to receive the living animals from above, said first conveyor comprising retaining means (40) making it possible to retain the living animals in said buckets from a loading zone (25) to a transfer zone (26) at the level wherein the living animals fall by the open bottom of the buckets into the sorting buckets (61) of the upper strand (6a) of the second conveyor.

3. Conveying device (1) according to claim 2, **characterised in that** said retaining means include an endless conveyor (40) mounted between upstream return means (41) and downstream return means (42) and of which the upper strand (40a) is arranged below the lower strand (2a), in parallel to the latter, opposite the open lower ends (21a) of the sorting buckets of said lower strand (2a) and advance substantially in synchronism with said lower strand.

4. Conveying device (1) according to claim 3, **characterised in that** the pre-positioning buckets are formed of hollow tubes (210) mounted on rectangular plates (22) arranged in parallel therein between one after another and assembled by their lateral ends between two synchronised parallel endless tracks.

5. Conveying device (1) according to any of claims 1 to 4, **characterised in that** the spacing pitch between two successive sorting buckets (61) is higher than the spacing pitch between two successive pre-positioning buckets (21), with the forward speed of the sorting conveyor (6) being higher than that of the pre-positioning conveyor (2).

6. Conveying device (1) according to any of claims 1 to 5, **characterised in that** the first conveyor (2) comprises successive transversal rows of at least two pre-positioning buckets (21), the sorting conveyor (6) comprising successive transversal rows of at least two sorting buckets (61).

7. Conveying device (1) according to any of claims 1 to 5, **characterised in that** it further comprises a loading system (5) able to bring the living animals one after the other on pre-positioning buckets.

8. Automatic chicks sexing system, **characterised in that** it comprises a conveying device (1) according to any of claims 1 to 7, each sorting bucket (61) comprising a lip (612a, 612b), more preferably inclined, whereon are intended to rest the spread out wings of the chicks falling from the pre-positioning buckets, and image acquisition means (70) able to obtain a photograph of at least one of the wings of each chick present in a sorting bucket in order to determine the sex thereof.

9. Automatic sexing system for chicks according to claim 8, **characterised in that** said lip (612a, 612b) is extended at the top by an inclined guiding wall (613).

10. Automatic sexing system for chicks according to claim 8 or 9, **characterised in that** each sorting bucket is provided with a trapdoor (620) provided with opening/closing means (625, 626), said sorting conveyor being provided with activating means (69) for activating said opening/closing means for the ejection via the bottom of the chick towards different recovery means according to the result of the image processing.

## Patentansprüche

1. Fördervorrichtung zum Befördern von lebenden Tieren, die insbesondere im Falle von Küken einen Kükenbeförderungsabschnitt aufweist, in welchem die Küken mit ausgebreiteten Flügeln in Näpfe platziert werden, **dadurch gekennzeichnet, dass** sie einen ersten Napfendlosförderer (2) enthält, der Vorplatzierungsnäpfe (21) aufweist, welche ein lebendes Tier einzeln aufnehmen und zwischen vorgelagerten Umlenkmitteln (32) und nachgelagerten Umlenkmitteln (33) transportieren können, sowie einen zweiten Napfendlosförderer (6), der Sortiernäpfe (61) aufweist, welche ein lebendes Tier einzeln aufnehmen und zwischen vorgelagerten Umlenkmitteln (63) und nachgelagerten Umlenkmitteln (64) transportieren können, wobei der erste Förderer und der zweite Förderer so angeordnet sind, dass jedes in einem Vorplatzierungsnapf gesetzte lebende Tier vom Vorplatzierungsnapf in einen Sortiernapf fällt, der unterhalb des Vorplatzierungsnapfes angeordnet ist.

2. Fördervorrichtung (1) nach Anspruch 1, **dadurch gekennzeichnet, dass** die Vorplatzierungsnäpfe (21) des Untertrumms (2a) des ersten Förderers (2) die lebenden Tiere von oben aufnehmen können, wobei der erste Förderer Haltemittel (40) aufweist, mit denen die lebenden Tiere in den Näpfen von einem Beschickungsbereich (25) ausgehend bis zu einem Übergabebereich (26) gehalten werden können, in welchem die lebenden Tiere durch den offenen Napfboden in die Sortiernäpfe (61) des Obertrumms (6a) des zweiten Förderers fallen.

3. Fördervorrichtung (1) nach Anspruch 2, **dadurch gekennzeichnet, dass** die Haltemittel ein Endlosband (40) aufweisen, das zwischen vorgelagerten Umlenkmitteln (41) und nachgelagerten Umlenkmitteln (42) angeordnet ist und dessen Obertrumm (40a) unterhalb des Untertrumms (2a) parallel zu dem letztgenannten, den offenen unteren Enden (21 a) der Sortiernäpfe des Untertrumms (2a) gegenüberliegend angeordnet ist und im wesentlichen im Gleichlauf mit dem Untertrumm vorrückt.

4. Fördervorrichtung (1) nach Anspruch 3, **dadurch gekennzeichnet, dass** die Vorplatzierungsnäpfe aus Hohlröhren (210) gebildet sind, die auf rechteckförmigen Platten (22) montiert sind, die parallel zueinander und aufeinanderfolgend angeordnet sind und mit ihren seitlichen Enden zwischen zwei gleichlaufenden, parallel verlaufenden Endlosketten montiert sind.

5. Fördervorrichtung (1) nach einem der Ansprüche 1 bis 4, **dadurch gekennzeichnet, dass** das Abstandsmaß zwischen zwei aufeinanderfolgenden Sortiernäpfen (61) größer ist als das Abstandsmaß zwischen zwei aufeinanderfolgenden Vorplatzierungsnäpfen (21), wobei die Vorrückgeschwindigkeit des Sortierförderers (6) höher ist als die des Vorplatzierungsförderers (2).

6. Fördervorrichtung (1) nach einem der Ansprüche 1 bis 5, **dadurch gekennzeichnet, dass** der erste Förderer (2) aufeinanderfolgende Querreihen von zumindest zwei Vorplatzierungsnäpfen (21) aufweist, wobei der Sortierförderer (6) aufeinanderfolgende Querreihen von zumindest zwei Sortiernäpfen (61) aufweist.

7. Fördervorrichtung (1) nach einem der Ansprüche 1 bis 5, **dadurch gekennzeichnet, dass** sie ferner eine Beschickungseinrichtung (5) aufweist, mit welcher die lebenden Tiere nacheinander in den Bereich der Vorplatzierungsnäpfe gebracht werden können.

8. Einrichtung zur automatischen Geschlechtsbestimmung von Küken, **dadurch gekennzeichnet, dass** sie eine Fördervorrichtung (1) nach einem der Ansprüche 1 bis 7 enthält, wobei jeder Sortiernapf (61) eine vorzugsweise geneigt verlaufende Randleiste (612a, 612b) aufweist, auf welche die ausgebreiteten Flügel der von den Vorplatzierungsnäpfen herabfallenden Küken zum Aufliegen kommen, sowie Bilderfassungsmittel (70), welche ein Foto von zumindest einem der Flügel eines jeden in einem Sortiernapf befindlichen Kükens aufnehmen können, um dessen Geschlecht zu bestimmen.

9. Einrichtung zur automatischen Geschlechtsbestimmung von Küken nach Anspruch 8, **dadurch gekennzeichnet, dass** die Randleiste (612a, 612b) von einer geneigt verlaufenden Führungswand (613) nach oben fortgesetzt wird.

10. Einrichtung zur automatischen Geschlechtsbestimmung von Küken nach Anspruch 8 oder 9, **dadurch gekennzeichnet, dass** jeder Sortiernapf mit einer Klappe (620) ausgestattet ist, die mit Öffnungs-/Schließmitteln (625, 626) versehen ist, wobei der Sortierförderer mit Betätigungsmitteln (69) zum Betätigen der Öffnungs-/Schließmittel ausgestattet ist, um das Küken nach unten je nach Ergebnis aus der Bildverarbeitung zu verschiedenen Auffangmitteln hin auszuwerfen.
